# EUROPEAN PATENT APPLICATION

(11) **EP 1 584 533 A1**
(43) Date of publication of application: **12.10.2005**
(21) Application number: 05252192.9
(22) Date of filing: 07.04.2005
(51) Int. Cl.: B60T 13/74

(54) **Electromechanical parking brake**

(30) Priority: 08.04.2004 IL 16132304
(71) Applicant: Mag-Eh Ltd, Mobile Post Ein Hashofet 19237 (IL)
(72) Inventor: Greenberg, Avraham, Rishon LeZion 75503 (IL); Peled, Shalom, Rehovot 76289 (IL)
(74) Representative: Fairbairn, Angus Chisholm

(57) **Abstract**

There is provided an electromechanical actuator for a parking brake system of a vehicle including an electric motor (6); bi-directional transmission means (10) associated with the rotor of the motor for transmitting motion from the rotor to a force application unit (16), as well as from the force application (16) unit to the rotor. The force application unit (16) is at least indirectly connected to the brake system, and locking and unlocking means (8) which, in a first state, allows the force application unit (16) to freely move and, in a second state, prevents the force application unit (16) from moving at least in one direction.

## Description

### Field of the Invention

The present invention relates to an electromechanical actuator used to activate the parking brakes of a vehicle by pulling or pushing mechanical means, such as a cable or a lever. Generally, a parking brake mechanism includes a device capable of generating braking torque to the vehicle's wheels. It comprises, for example, a drum with friction pads or a caliper that presses friction pads against a disk. The braking torque device is designed so that application of power in the form of force and motion will cause braking torque build-up, while release of the force will remove the braking torque. It is common practice to deliver the actuation motion and load from the actuator to the braking torque device via cables.

### Background of the Invention

There exist various electromechanical apparatuses to operate the parking brake using an electrical motor and transmission. In order to convert the rotary motion of the motor and gear to linear motion required for pulling the parking brake cable(s), a lead screw device is most commonly used. In prior electromechanical parking brake systems, the transmission is unidirectional, i.e., the cable load or release cannot push the lead screw and rotate the motor by driving the transmission in the opposite direction. This is usually achieved by selecting a low-efficiency lead screw or by devising a brake mechanism that delivers only torque from the motor side, but not from the brake cable side. Such unidirectional transmissions are referred to as self-locking. These arrangements require powerful and expensive motors.

### Disclosure of the Invention

It is thus one of the objects of the present invention to provide an actuator for parking brakes of vehicles that is basically simple, does not take up much space and uses low-power, inexpensive motors. It also provides for manual operation in case of current breakdown.

According to the present invention this is achieved by providing an electromechanical actuator for a parking brake system of a vehicle, comprising an electric motor; bi-directional transmission means associated with the rotor of said motor for transmitting motion from said rotor to a force application unit, as well as from the force application unit to said rotor; said force application unit being at least indirectly connected to said brake system, and locking and unlocking means which, in a first state, allows said force application unit to freely move and, in a second state, prevents said force application unit from moving at least in one direction.

### Brief Description of the Drawings

The invention will now be described in connection with certain preferred embodiments with reference to the following illustrative figures so that it may be more fully understood.

With specific reference now to the figures in detail, it is stressed that the particulars shown are by way of example and for purpose of illustrative discussion of the preferred embodiments of the present invention only and are presented in the cause of providing what is believed to be the most useful and readily understood description of the principles and conceptual aspects of the invention. In this regard, no attempt is made to show structural details of the invention in more detail than is necessary for a fundamental understanding of the invention, the description taken with the drawings making apparent to those skilled in the art how the several forms of the invention may be embodied in practice.

### In the drawings:

Fig. 1 is a perspective view of a preferred embodiment of an actuator, according to the present invention;
Fig. 2 represents a top view of the actuator of Fig. 1;
Fig. 3 illustrates part of the actuator, with the solenoid-driven abutment member in the released, rotor-stopping state;
Fig. 4 is a top view showing part of the actuator, with the solenoid-driven abutment member in the retracted, rotor-releasing state;
Fig. 5 shows the manual actuator unit having pushed the abutment member into its rotor-releasing state and engaging the stop pins with its drive pins;
Fig. 6 is an enlarged, elevational view of the stroke sensor of the actuator;
Fig. 7 represents a block diagram showing the major components of the actuator according to the invention and their functional interconnection;
Figs. 8 (a) and 8 (b) are schematic perspective views of a subassembly of the actuator in released and activated states, respectively, of a further embodiment according to the invention;
Figs. 9 (a) and 9 (b) are schematic perspective views of a transmission subassembly in released and activated states, respectively, of the further embodiment according to the invention;
Fig. 10 is a schematic side view of the locking and unlocking subassembly of the further embodiment according to the invention, and
Fig. 11 is a schematic perspective view of the locking and unlocking subassembly of the further embodiment according to the invention.

### Detailed Description of the Preferred Embodiments

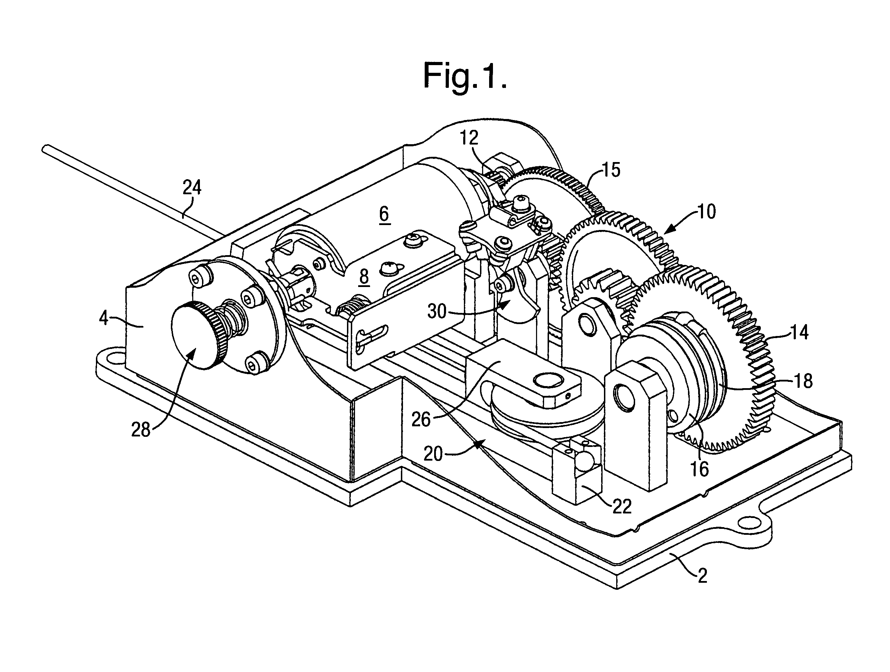

Referring now to the drawings, there are seen in Fig. 1, a base 2, a cover 4, an electric motor 6 mounted on base 2, a solenoid 8 fixedly attached to motor 6, a transmission in the form of a spur gear train 10. The first gear 12 of the gear train 10 is mounted on the rotor shaft of motor 6 and to the last gear 14 of which is attached a force application unit, e.g., a reeling drum 16. A length of cable 18 is wound on the drum 16, one end of which is fixedly attached thereto. In this embodiment of the actuator, cable 18 does not pass directly to the parking brake mechanism, but is lead over a single-sheave pulley block 20 to be anchored in a post 22 mounted on base 2. Connection to the parking brake is effected by another length of cable 24 attached to the pulley block frame 26. The effect of pulley block 20 is obviously to double the force exerted by cable 18.

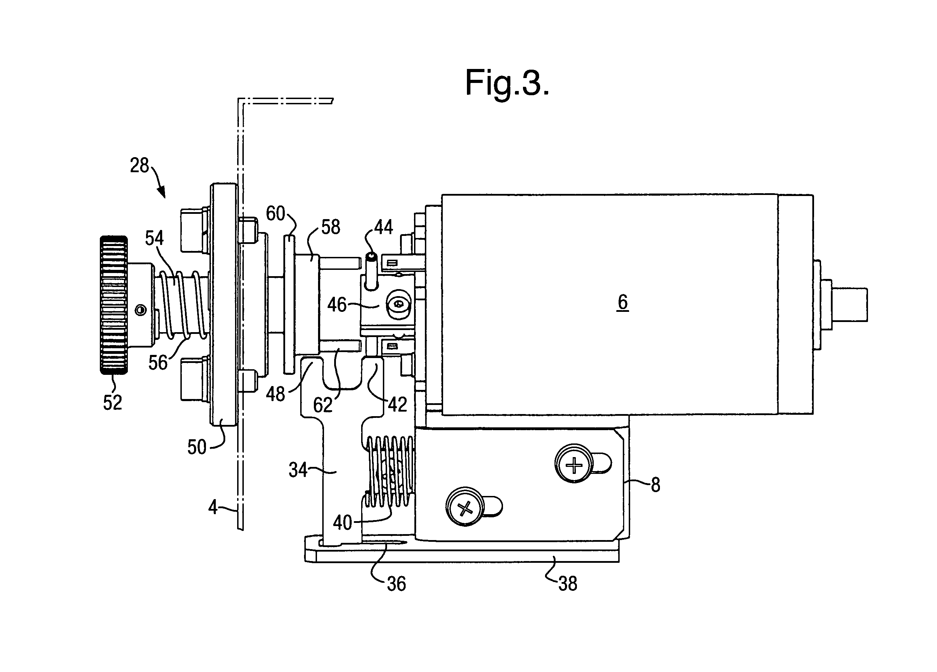

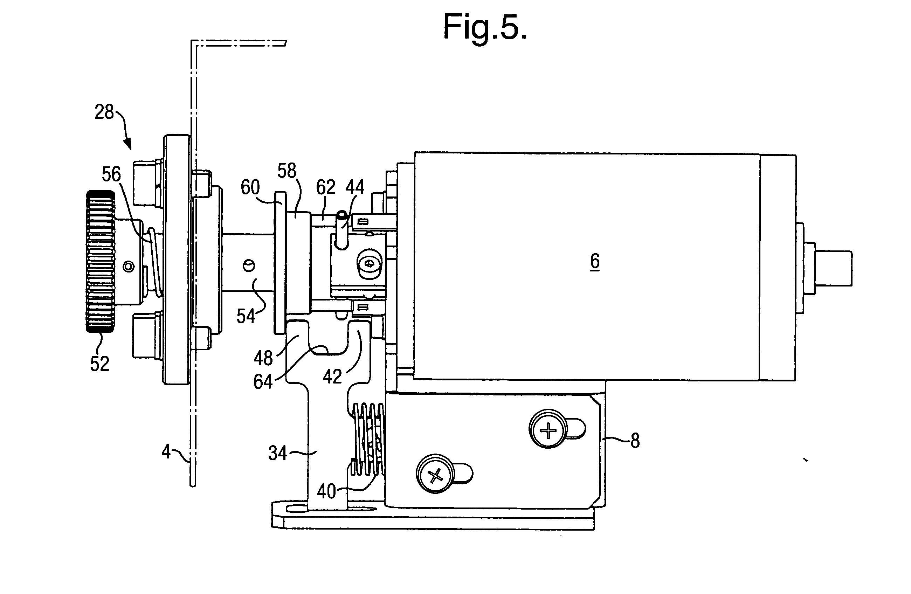

Another component of the actuator is a manual actuator 28 that permits the parking brake to be operated manually, e.g., in case of battery failure. Details of actuator 28 are shown to a larger scale in Figs. 3 and 5.

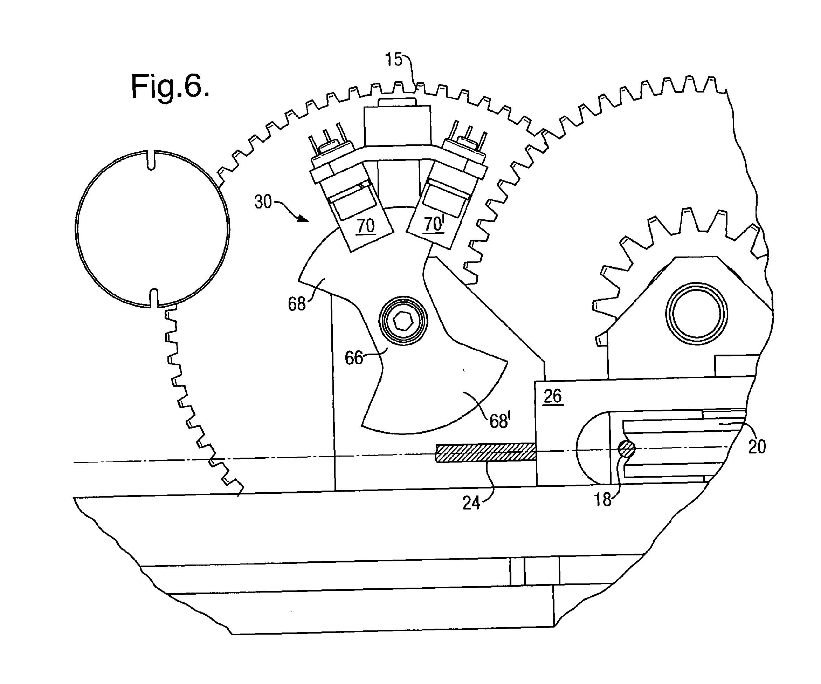

Further seen, coupled with gear 15, is a stroke sensor 30 which monitors the braking, as well as break-releasing strokes of cable 24. Description and details will be given further below, in conjunction with Fig. 6.

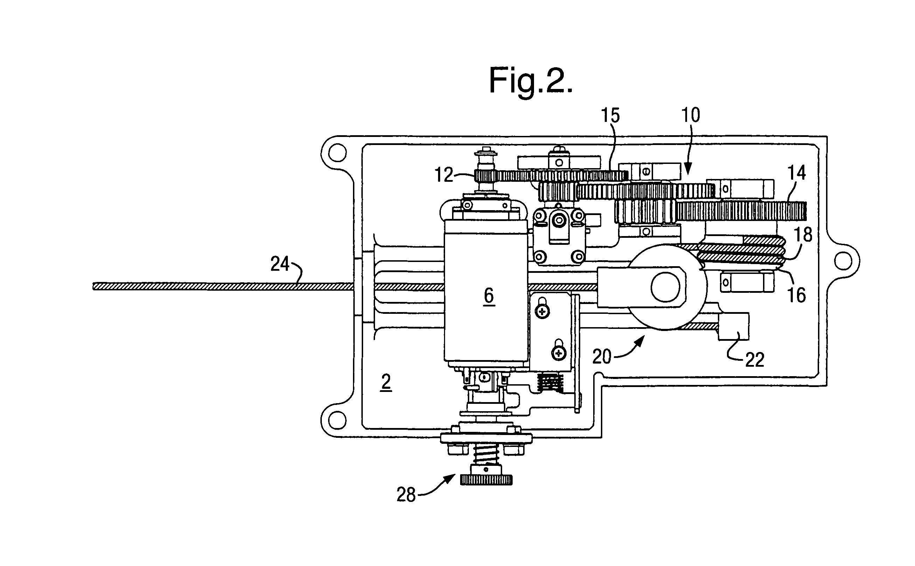

Fig 2 is a top view, showing the actuator without cover 4. The transmission, herein the form of gear train 10, must be bi-directional, i.e., movement must be transmissible not only from first gear 12 mounted on the rotor of motor 6 to gear 14, but also from gear 14 to first gear 12. While a gear train clearly meets the demand for bi-directionality, this demand can obviously also be met by other known transmission means, such as belts and pulleys, chains and sprockets, harmonic drives, etc.

The top view of Fig. 3 illustrates the locking and unlocking means of the device. There is seen a solenoid 8 to the armature of which is fixedly attached the fork-like abutment member 34, the "handle" end of which is guided in a guide slot 36 provided in a flat 38 attached to solenoid 8. In the rest position of solenoid 8, a biasing spring 40 pushes abutment member 34 to its extreme position, as defined by the end of slot 36. In this position, one of the "tines" 42 of abutment member 34 is located in the plane of rotation of stop pins 44, radially projecting from a slotted sleeve 46 clamped onto the projecting end of the rotor of motor 6. As can be clearly seen, in this the position abutment member is in the locking state, i.e., prevents rotation of motor 6.

"Tine" 48 has a different task, to be elucidated in conjunction with Fig. 5.

While the motor lock described above meets the demand for locking and unlocking the rotor, this demand can also be met by other known means, such as a magnetic lock and friction lock, etc.

Also shown is the manual actuator 28 as mounted on cover 4 with the aid of flange 50. Actuator 28 is seen to comprise a knurled knob 52, fixedly attached to a shaft 54, rotatable and slidable in flange 50. Shaft 54 is biased towards its rest position by spring 56. Mounted on the end of shaft 54 is a body 58 including a collar 60. Body 58 carries two drive pins 62 which, as will be seen in Fig. 5, are designed to engage stop pins 44 during the manual operation of the actuator.

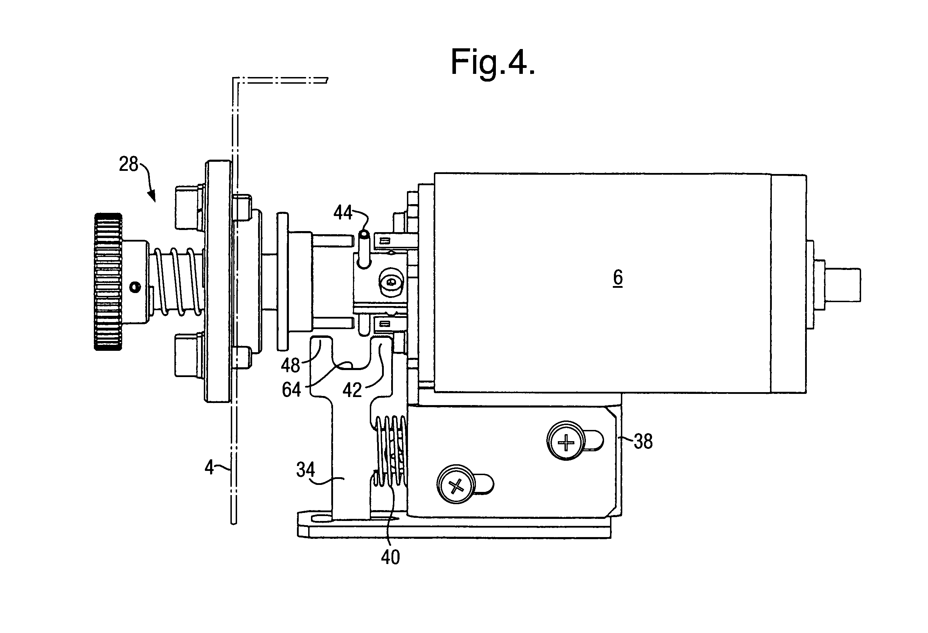

While Fig. 3 illustrates the locking position of the abutment member 34, Fig. 4 illustrates the unlocking state. Solenoid 8 has been energized, pulling abutment member 34 to the right, against biasing spring 40. This act pulls tine 42 out of the path of movement of stop pins 44, which can now freely pass through the recess 64.

Fig. 5 shows manual actuator 28 being brought into action. Knob 52 has been pushed against the biasing force of spring 56 with two results: collar 60, encountering tine 48, has pushed abutment member 34 to the right, thereby moving tine 42 out of the path of stop pins 44, and drive pins 62 have been moved to a position in which they can engage stop pins 44 and, when knob 52 is manually rotated, can rotate the rotor of motor 6 in any direction.

Fig. 6 represents another component of the actuator according to the invention, namely, the stroke sensor 30 which monitors the braking, as well as brake-releasing movements of cable 24. Seen is a two-lobed proximity chopper 66 attached to, and rotating together with, the shaft of gear wheel 15. Closely adjacent to chopper 66, and stationary relative thereto, there are mounted two proximity sensors 70 and 70'. These sensors can be any of the known types such as opto-couplers, Hall effect sensors, brushless signal generators, etc. When the chopper 66 rotates, lobes 68, 68' altematingly activate and deactivate signals from the proximity sensors, with the number of signals received from the moment the actuator has been activated being proportional to the stroke carried out by the system. The distance between sensors 70 and 70' is significantly smaller than the circumferential distance between lobes 68, 68', which facilitates discrimination. The order in which sensors 70 and 70' are activated indicates the direction of rotation of chopper 66, and hence, the direction of transmission (pull or release). The signals emitted by the sensors also allow the monitoring of the speed of rotation of the unit.

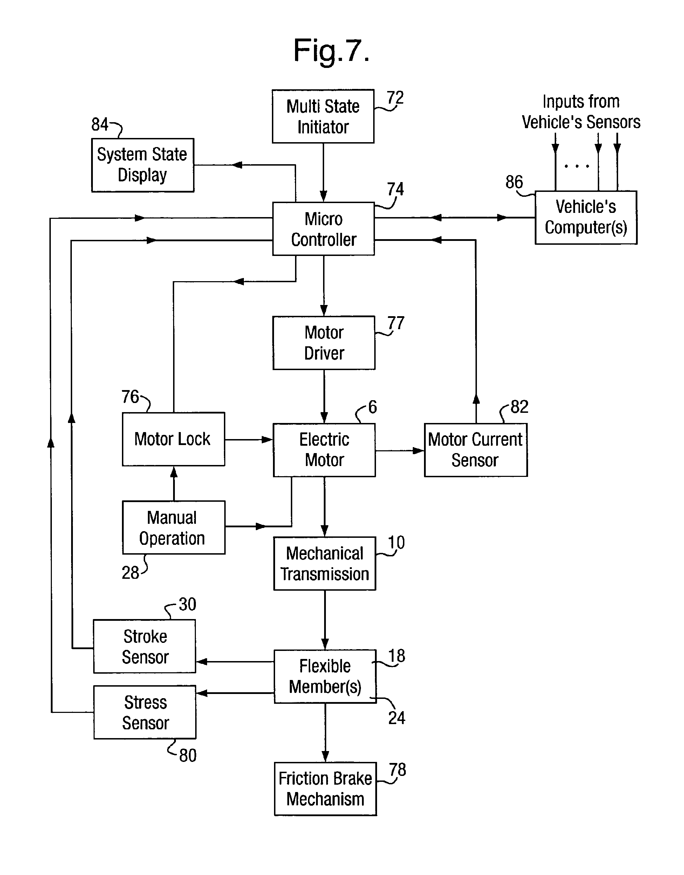

In the following explanation of the sequences of operations occurring when causing the brake to be pulled or released, reference is also made to Fig. 7, a block diagram indicating the various components involved, as well as their functional interaction.

For pulling the brake, an appropriate signal from initiator 72 is delivered to controller 74, which supplies electrical current to motor lock 76 (in the form of solenoid 8), thereby unlocking it. Subsequently controller 74 also delivers current to motor 6 via motor drive 77, thereby also actuating transmission 10, the last gear 14 of which also rotates reeling drum 16. The latter winds up cable 18 and, indirectly, also pulls cable 24 (see Fig. 2) which, leading to the brake mechanism 78, causes the parking brake to be pulled. The pulling stroke is monitored by stroke sensor 30 (Fig. 6), the signal of which is fed to controller 74, which cuts off the current to motor 6 when the required stroke has been achieved, at the same time also cutting off the current to solenoid 8, which reverts to the locking position. Also monitored is the stress in cable 24 by the provision of a stress sensor 80, such as a piezoelectric or strain gauge load cell. Another way of monitoring cable stress is to monitor the motor current, which is effected by motor current sensor 82. It is only the stress sensor that is active when the vehicle tends to slide down an incline, without the actuator being under current.

Releasing the parking brake takes place according to the following sequence: an appropriate signal from initiator 72 is delivered to controller 74, which supplies current to motor lock 76, thereby unlocking it and thus allowing cable 24 to relieve its stress by rotating motor 6 in the reverse direction via bi-directional transmission 10. When stress detector 80 detects the minimum tension required to prevent cable slack, controller 74 cuts off the current to motor lock 76, thus preventing further rotation of motor 6 by cable 24. Further optional blocks are a system slate display 84, as well as a connection of the vehicle computers to and from controller 74.

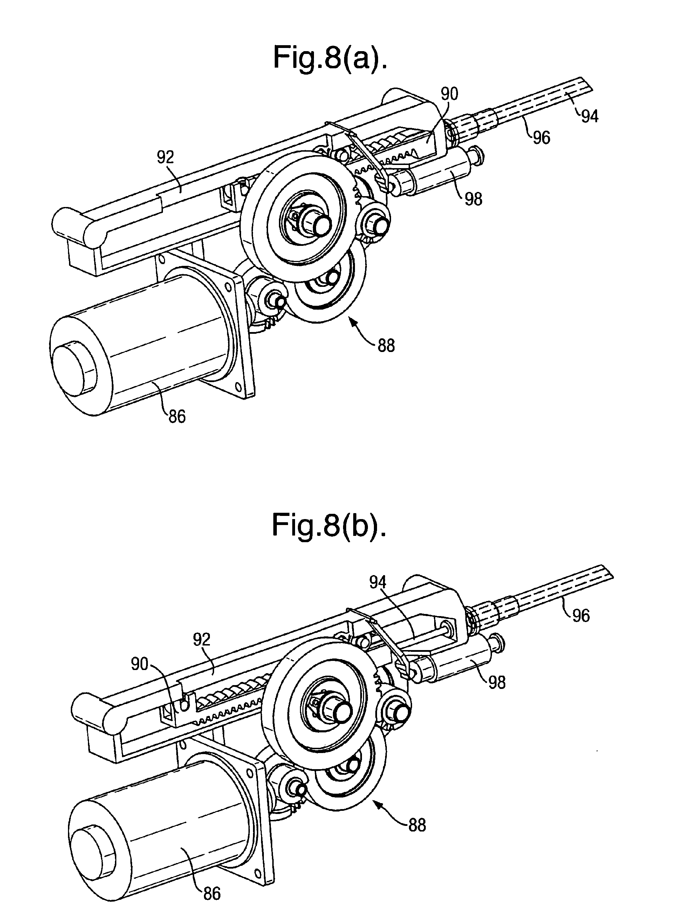

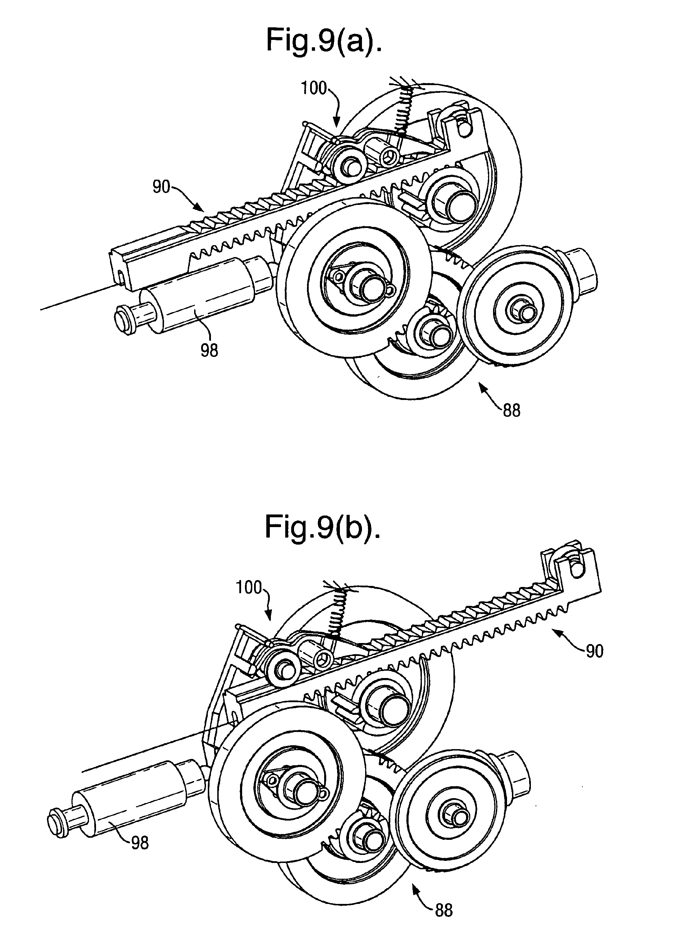

Referring now to a further embodiment according to the invention, there are seen in Figs. 8 (a) and 8 (b) schematic perspective views of its subassembly in released and activated states, respectively. Motor 86 is coupled to gearwheels 88 (the cogs are only schematically represented), which operate serrated rack 90. The gear wheels 88 operate as a bi-directional transmission in the sense that it enables deliverance of force and motion from the motor 86 to the rack 90, and vice versa. Rack 90 moves in a bracket 92 and is coupled to a cable 94, which is strung in a conduit 96. The cable 94 is operationally coupled to the vehicle's brake units (not shown). Solenoid 98 activates a ratchet unit 100 (see Figs. 9, 10, 11).

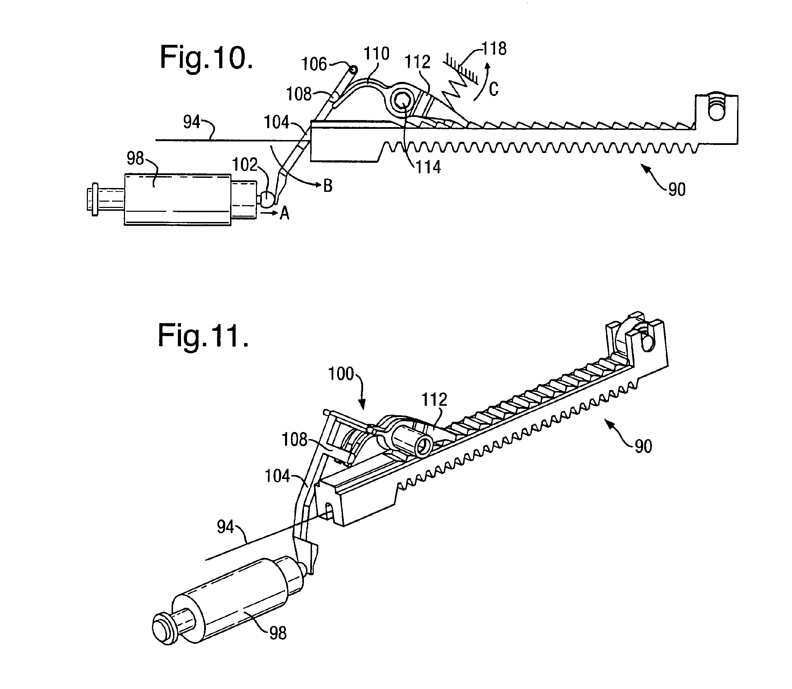

Fig. 9 results from Figs. 8 (a) and 8 (b) when motor 86, bracket 92, cable 94 and conduit 96 have been removed in order to expose further details of the transmission. The details of ratchet 100 are best seen in Figs. 10 and 11. Plunger 102 of solenoid 98 is, upon application of voltage, movable in direction of arrow A, to push lever 104 to swivel around pivot 106 in the direction of arrow B. Consequently, lever 104, via protrusion 108, pushes curved lever 110 attached to tooth 112, the latter also being attached to turnable pivot 114. The pivot 114 consists of a gripping means, e.g. an hexagonal head, which facilitates lifting of the tooth by means of an external tool (not shown). The tooth 112 is lifted against the force of a compression spring 118, and thereby rack 90 is released. In the event that cable 94 pulls rack 90 so that the force applied on lever 110 is insufficient to lift the tooth 112, it may be necessary to activate motor 86 in a suitable direction.

It will be evident to those skilled in the art that the invention is not limited to the details of the foregoing illustrated embodiments and that the present invention may be embodied in other specific forms without departing from the spirit or essential attributes thereof. The present embodiments are therefore to be considered in all respects as illustrative and not restrictive, the scope of the invention being indicated by the appended claims rather than by the foregoing description, and all changes which come within the meaning and range of equivalency of the claims are therefore intended to be embraced therein.

## Claims

1. An electromechanical actuator for a parking brake system of a vehicle, comprising:
an electric motor;
bi-directional transmission means associated with the rotor of said motor for transmitting motion from said rotor to a force application unit, as well as from the force application unit to said rotor;
said force application unit being at least indirectly connected to said brake system, and
locking and unlocking means which, in a first state, allows said force application unit to freely move and, in a second state, prevents said force application unit from moving at least in one direction.

2. An actuator according to claim 1, wherein said force application unit consists of a reeling means cooperating with a flexible pulling means.

3. An actuator according to claim 2, further comprising stop means fixedly attached to said rotor.

4. The actuator as claimed in claim 2, wherein said stop means is at least one projection extending from a shaft of said rotor.

5. The actuator as claimed in claim 2, wherein said locking and unlocking means comprises abutment means.

6. The actuator as claimed in claim 5, wherein said abutment means is attached to a carrier means fixedly mounted relative to said motor and by the electromagnetic action of a solenoid means, said abutment means is shifted into said first state, whilst cessation of this action permits said abutment means to return to said second state.

7. The actuator as claimed in claim 2, wherein said transmission means is a spur gear train, the first gear of which is fixedly attached to a first end of a shaft of said rotor, and the last gear of which rotates together with said reeling means.

8. The actuator as claimed in claim 2, wherein said flexible pulling means is at least one length of a steel cable.

9. The actuator as claimed in claim 8, wherein said reeling means is a drum along which is wound said steel cable.

10. The actuator as claimed in claim 2, further comprising a pulley block having at least one sheave, the frame of which block is connected to said brake system by cable means.

11. The actuator as claimed in claim 2, further comprising manual activation means rotatably and slidably mounted in relationship with said rotor.

12. The actuator as claimed in claim 2, further comprising stroke sensor means mechanically coupled to one of the shafts of said transmission means.

13. The actuator as claimed in claim 8, further comprising stress sensor means cooperating with said cable means.

14. The actuator as claimed in claim 1, wherein said force application unit consists of a serrated rack.

15. The actuator as claimed in claim 14, wherein said locking and unlocking means consists of a ratchet means operable by an electromagnet.

16. The actuator as claimed in claim 15, wherein the ratchet means cooperates with said rack.

17. The actuator as claimed in claim 15, wherein the ratchet means cooperates with a cogwheel of said transmission.

18. The actuator as claimed in claim 15, wherein said ratchet means is manually operable by means of an external tool.
